# EUROPEAN PATENT SPECIFICATION

(11) **EP 3 053 311 B1**
(45) Date of publication and mention of the grant of the patent: **29.11.2017**
(21) Application number: 14824521.0
(22) Date of filing: 25.09.2014
(51) Int. Cl.: H04L 12/733

(54) **SYSTEMS AND METHODS FOR DISTANCE APPROXIMATION IN GRAPHS**
SYSTEME UND VERFAHREN ZUR DISTANZANNÄHERUNG IN GRAPHEN
SYSTÈMES ET PROCÉDÉS D'APPROXIMATION DE DISTANCE DANS DES GRAPHES

(30) Priority: 30.09.2013 US 201314041210
(43) Date of publication of application: 10.08.2016
(73) Proprietor: Alcatel Lucent, 92100 Boulogne-Billancourt (FR)
(72) Inventor: AJWANI, Deepak, Dublin (IE); KENNEDY, William, Murray Hill, New Jersey 07974-0636 (US); SALA, Alessandra, Dublin (IE); SANIEE, Iraj, Murray Hill, New Jersey 07974-0636 (US)
(74) Representative: Berthier, Karine
(86) International application number: PCT/IB2014/002212
(87) International publication number: WO 2015/044777

(56) References cited:
- EP-A1- 1 677 473
- WO-A1-2008/112247
- WO-A1-2009/053477
- US-A1- 2013 107 698

## Description

### TECHNICAL FIELD

The present disclosure is directed towards mining information in data sets. More particularly, it is directed towards systems and methods for extracting information from graphical models representing large data sets.

### BACKGROUND

This section introduces aspects that may be helpful in facilitating a better understanding of the systems and methods disclosed herein. Accordingly, the statements of this section are to be read in this light and are not to be understood or interpreted as admissions about what is or is not in the prior art.

The recent explosion in the amount of accessible data, due in part to the rapid increase in online interactions, has led many research, business and marketing communities to represent information in a graphical manner. While graphical models (e.g., social network graphical models, call data graphical models, etc.) can provide intuitive representations of relationships or interconnections between raw data, extracting information from such graphical models generally involves a very large number of computations to determine how various entities such as subscribers, groups, people, objects, machines, etc., interact or relate with other entities; see also the disclosure of document US 2013/107698 A1. As many graphical models can include massive number of nodes representing entities interconnected by many thousands or millions of connections, there is a need for scalable systems and methods for reducing the time and computational effort to mine information from graphical models representing data sets.

### BRIEF SUMMARY

In various aspects, systems and methods for constructing one or more tree sub-graphs for estimating shortest distances between a given pair of nodes of a graph having multiple interconnected nodes are provided.

One aspect includes selecting one or more root nodes from the multiple interconnected nodes of the graph. The aspect further includes constructing, starting with the selected root nodes, a respective multi-level tree sub-graph which represents the multiple interconnected nodes of the graph in a parent-child relationship in successive levels of the multi-level tree sub-graph, where at least one level of the multi-level tree sub-graph is expanded into a successive level based on a descending order of degree of the parent nodes in that level. For example, where the degrees of at least one parent node in the plurality of parent nodes in a given level of the tree sub-graph are higher than the degrees of one or more other parent nodes, the parent nodes having the higher degrees are expanded into their child nodes in the successive level before the parent nodes that have relatively lower degrees.

In one aspect, the one or more root nodes may be determined by: determining a node u from the graph; determining a node v from the graph, where node v is determined as the node of the graph that is farthest away from node u of the graph; and, selecting node v as one of the one or more root nodes.

In another aspect, the node u that is selected from the graph may be a node that is randomly selected from the graph.

In one aspect, the one or more root nodes may be determined by determining a node w from the graph, where node w is determined as the node of the graph that is farthest away from a node v of the graph; and, selecting node w as one of the one or more root nodes.

In one aspect, the one or more root nodes may be determined by determining a shortest distance path between a node v of the graph and a node w of the graph; and, determining a node x from the graph as the node of the graph that is close to midway on the shortest distance path between node v of the graph and node w of the graph; and, selecting node x as one of the one or more roots nodes.

In one aspect, the one or more root nodes may be determined by determining a node y from the graph as the node of the graph that has the highest degree within a predetermined distance from a node x of the graph; and, selecting node y as one of the one or more root nodes.

A further aspect includes determining a respective shortest distance for the given pair of nodes from each of at least one of the respective tree sub-graphs; and, estimating the distance between the given pair of nodes of the graph as a minimum of the determined respective shortest distances.

Another aspect includes determining, based on a diameter of the graph, the number of root nodes that are selected from the multiple nodes of the graph or the number of respective tree sub-graphs that are constructed.

One aspect includes computing a statistical expected value of error based on estimated distances determined between the given pair of nodes using the tree sub-graphs and actual distances between the given pair of nodes computed based on the graph; and, using the statistical expected value of error to dynamically determine the number of root nodes that are selected from the multiple nodes of the graph or the number of respective tree sub-graphs that are constructed.

Another aspect includes determining additional ones of the one or more root nodes by, for example, selecting the additional root nodes based on descending order of degrees of respective ones of the multiple interconnected nodes of the graph.

### BRIEF DESCRIPTION OF THE DRAWINGS

FIG. 1 illustrates an example of a graphical model of a data set in accordance with an aspect of the disclosure.
FIG. 2 illustrates an example of degrees associated with the nodes of the graphical model of FIG. 1.
FIG. 3 illustrates an example of a process flow-diagram in accordance with an aspect of the disclosure.
FIG. 4 illustrates an example of shortest distance paths and shortest distances between a given node and the remaining nodes of the graphical model of FIG. 1.
FIG. 5 illustrates an example of constructing a tree sub-graph in accordance with an aspect of the disclosure.
FIGS. 6-7 illustrate additional examples of tree sub-graphs in accordance with an aspect of the disclosure.
FIG. 8 illustrates an example of an apparatus for implementing the process flow-diagram of FIG. 3.
FIG. 9 illustrates one example of a weighted binary tree which preserves the node-pair distances of graph 100 of FIG. 1.

### DETAILED DESCRIPTION

Various aspects of the disclosure are described below with reference to the accompanying drawings, in which like numbers refer to like elements throughout the description of the figures. The description and drawings merely illustrate the principles of the disclosure. It will be appreciated that those skilled in the art will be able to devise various arrangements that, although not explicitly described or shown herein, embody the principles and are included within spirit and scope of the disclosure.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

A fundamental computation with respect to a graphical model ("graph") representation of a data set involves determining the shortest distance between the various interconnected nodes of the graph. Distance can be generally understood as the number of edges that are traversed, or, equivalently, the number of node hops that are made, to reach a given destination node of a graph from a given source node of the graph. In many data mining schemes, the computation to determine the shortest distance between a given pair of nodes is performed many times and often at least as many times as the number of nodes in the graph, if not more. For graphs that include many thousands, many millions, or an even larger number of nodes, it is a non-trivial computational challenge to respond rapidly enough to one or more queries for the shortest distance between various interconnected nodes of the graph for the overall data mining scheme to run in a reasonable time.

The present disclosure describes aspects for processing a graph representation of a data set into a selective collection of tree sub-graphs that can be used to rapidly and accurately estimate the shortest distances between any two nodes of the graph. Although the aspects disclosed herein are particularly relevant where there are a large number of interconnected nodes (e.g., many thousands or many millions) they are also applicable to graphs having any number of nodes.

In general, a hyperbolic graph is a graph of nodes interconnected with edges in which, for any given set of four interconnected nodes, the six distances between all pairs of nodes differ collectively from the distances on an appropriate approximation tree by no more than a fixed value, usually referred to as delta. Delta-hyperbolic graphs typically include a non-empty core of nodes having a maximal centrality which scales by *N²,* where *N* is the node size of the graph. Delta-hyperbolic graphs typically also have a logarithmic scale diameter, in which the maximum shortest distance or diameter for all pairs of nodes of the graph is proportional to the node size N of the graph by a factor of log N. The aspects that are described in detail below leverage the hyperbolic properties of the graph to construct a collection of one or more tree sub-graph approximations to the graph which are then used to query the distances (e.g., the shortest distances) between any pair of nodes within the graph.

As illustrated in detail below, one or more tree sub-graphs are generated based on hyperbolic curvatures of the graph. The tree sub-graphs are then used for estimating distances in response to one or more queries for distances between various nodes of the graph. The generation of the tree sub-graphs may introduce a non-zero (but acceptably small) amount of distortion or error in the distances that are computed based on the tree sub-graphs compared to the actual distances that may be computed between any two given nodes from the graph itself. However, it has been found that the statistical expected value of the distortion or error between the distances approximated using the tree sub-graphs and the actual distances in the graph may be considered to be zero or close to zero for hyperbolic graphs having a large number of nodes (e.g., thousands or millions of nodes), and may be small and acceptable for hyperbolic graphs having a fewer number of nodes (e.g., tens or hundreds or nodes).

As noted previously, determining the shortest distances between various interconnected nodes of a graph that includes many thousands or millions of nodes is generally very computationally intensive. As a result, the time it takes to respond to queries for distances between various nodes of the graph can take minutes, hours, or even days. Accordingly, aspects of the present disclosure are directed towards generating a collection of tree sub-graphs based on the graph and estimating distances between nodes of large graphs using the tree sub-graphs in a manner that may be much faster and less computationally intensive then conventional methods.

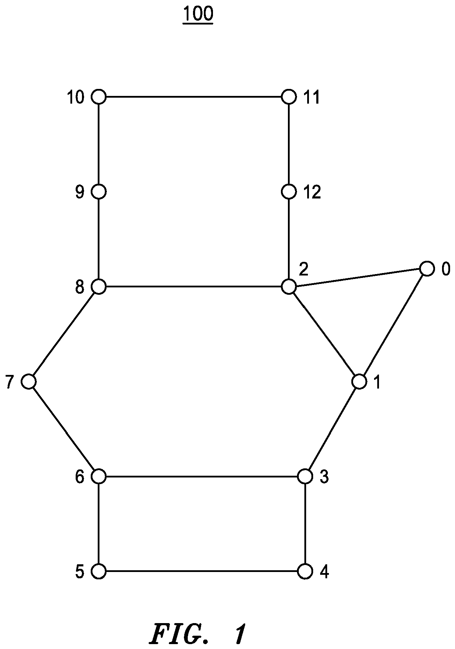

FIG. 1 shows a simplified example of a graph 100 which depicts a small number of nodes (or vertexes) for the purposes of illustrating various aspects of the disclosure. Although only a few nodes are depicted in graph 100 for aiding the understanding of the principles of the disclosure, it will be appreciated that in practice a graph may typically include a large number (e.g., many thousands or many millions) of interconnected nodes.

Example graph 100 illustrates thirteen nodes (designated as 0-12 in FIG. 1), that are all interconnected with each other by one or more edges (depicted as lines in FIG. 1). A first node is a neighbor of a second node if there is an edge that directly interconnects the first node with the second node without any intervening nodes. As one example, the neighboring nodes of node 5 are nodes 4 and 6. Similarly, the neighboring nodes of node 2 can be seen to be node 0, node 1, node 8 and node 12.

Each node depicted in FIG. 1 is directly or indirectly interconnected to every other node by one or more edges, such that there is at least one shortest distance path in graph 100 between any given pair of nodes. For example, graph 100 shows that the shortest distance between node 5 and node 3 is two (2), since the shortest distance path by which one can arrive at node 3 starting from node 5 involves traversing a minimum of two edges (or two node hops) via the path 5-4-3 or, equivalently, via the path 5-6-3. Furthermore, the shortest distance between node 9 and node 8 is one (via path 9-8), whereas the shortest distance between node 12 and node 6 is four (via path 12-2-8-7-6 or 12-2-1-3-6). Similar determinations of the shortest distance paths may be made for all remaining pairs of the twelve nodes illustrated in graph 100.

In addition to at least one shortest distance path between any two given nodes, there are also other paths of longer distances between any given pair of nodes. For example, one longer distance path for arriving at node 3 starting from node 5 in graph 100 involves traversing the path 5-6-7-8-2-1-3 having a distance of six (6). An even longer path with a distance of ten (10) is 5-6-7-8-9-10-11-12-2-1-3. Similar longer distance paths can be determined for all remaining pairs of nodes depicted in graph 100.

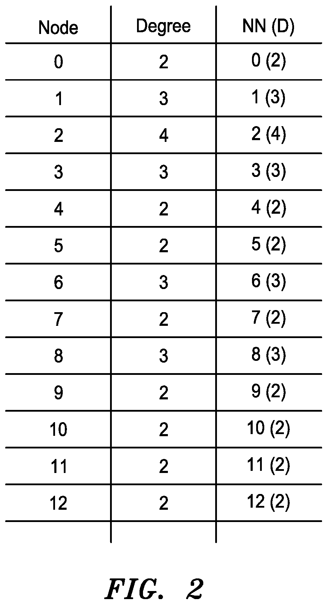

Each of the respective nodes 0-12 may be determined to have a degree that represents the number of edges or interconnections associated with each respective node of graph 100. Although it is assumed herein that all of the edges of graph 100 are un-weighted (or have the same relative weight), this is not a limitation. In other aspects, one or more of the edges of the graph 100 may have different weights, which may be taken into account when determining the degrees of the nodes. FIG. 2 illustrates the degree for each of the nodes 0-12 of graph 100 based on the number of edges interconnecting a given node with its neighboring nodes.

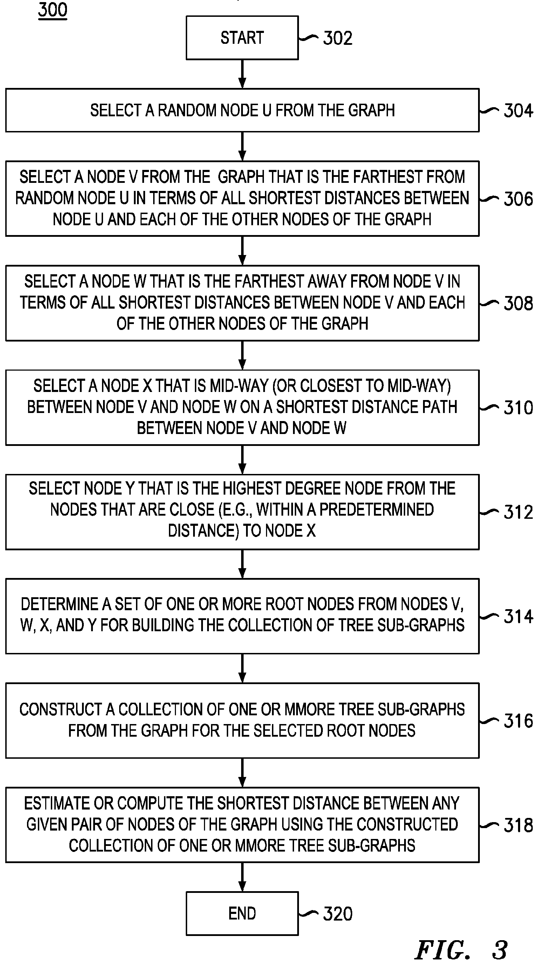

FIG. 3 illustrates an example process 300 in accordance with aspects of the disclosure for constructing a collection of tree sub-graphs that can be used to estimate the shortest distances between any two nodes of a graph (e.g., graph 100). In general, a tree sub-graph may be understood as a multi-level tree representation that illustrates a shortest distance path from a designated root node of the graph to each of other nodes of the graph. Each node of the graph is represented in the tree sub-graph as a child node of a single parent node (except for the designated root node). In other words, each of the nodes of the graph (e.g., graph 100), is represented once in the tree sub-graph.

Furthermore, nodes of the tree sub-graph that have the same parent node may be understood as siblings. Nodes of the tree sub-graph that do not have a child node may be understood as leaf nodes. Nodes that have at least one child node may be understood as the parent node of the at least one child node. The height (or depth) of the multi-level tree sub-graph may be understood as the total number of levels in the multi-level tree sub-graph.

One of the features of the present disclosure is a methodology for the selection or designation of particular root nodes for the collection of one or more tree sub-graphs. Another feature of the present disclosure is a methodology of constructing (e.g., expanding) the levels of the tree-graphs based on the selection of the root nodes. These and other aspects of the present disclosure will be apparent in the example of process 300, which is now described herein.

The process 300 begins in step 302. In step 304, a node u is randomly selected from the graph. For the example illustration based on the graph 100 of FIG. 1, it is assumed that node 4 of graph 100 is randomly (or pseudo randomly) selected as the initial node u, although any other previously unselected node of graph 100 may also by selected as node u in other ways.

In step 306, a node v is selected as the node that is the farthest away from node u in terms of all shortest distances between node u and each of the other nodes of the graph. In case there are multiple nodes in the graph that are equivalently farthest away from node u, then any one of such equivalently farthest away nodes may be selected (e.g., randomly) as node v.

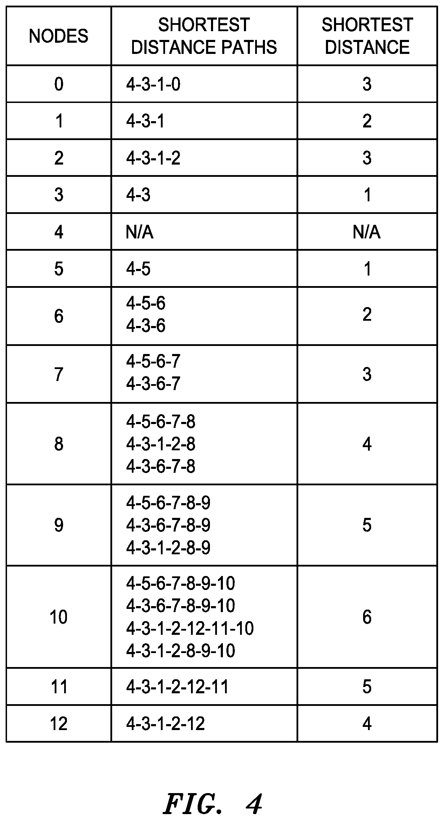

FIG. 4 shows the shortest distance paths and the shortest distances for the example illustration where node 4 is selected as node u. As seen in FIG. 4, the node that is farthest away from node 4 in terms the shortest distances between node 4 and each of the other nodes of the graph 100 is node 10 (by a distance of six (6)). Since node 10 is the farthest node from node 4 in terms of the shortest distances between node 4 and each of the other nodes of graph 100, node 10 is selected as node v in step 306 for the example illustration.

Just for comparison, FIG. 4 shows that the second farthest nodes from node 4 are nodes 9 and 11 (by a distance of five (5)), whereas, at the other extreme, the closest nodes in terms of the shortest distances to node 4 are nodes 3 and 5 (by a distance of one (1)) in graph 100.

In step 308, a node w is determined as the node that is farthest away from node v in terms of all shortest distances between node v and each of the other nodes of the graph. In the example illustration, it can be seen from graph 100 that the farthest node from node 10 (node v) in terms of all shortest distances between node 10 and each of the other nodes happens to be node 4. Thus, node 4 is selected as node w in step 308 for the example illustration.

It will be noted that in the example illustration node 4 is selected both as node u (in step 304) and node w (in step 308). However, this is more a result of the initial random choice of node 4 as node u, and, in other realizations of the process 300, node u that is selected step 304 and node w that is selected in step 308 can be, and generally may be, different nodes of the graph.

In step 310, a node x is determined as the node that is mid-way (or closest to mid-way) between node v and node w on a shortest distance path between node v and node w. Continuing the example illustration based on graph 100, it can be seen that there are multiple equivalent shortest distance paths of distance six (6) between node 10 (node v) and node 4 (node w). It can also be seen that node 7 is the mid-way node on two of the shortest distance paths (path 4-5-6-7-8-9-10 and path 4-3-6-7-8-9-10) and that node 2 is the mid-way node on the other two shortest distance paths (path 4-3-1-2-12-11-10 and 4-3-1-2-8-9-10). Thus, either node 2 or node 7 of graph 100 may be selected as node x. For the example illustration, it is assumed that node 7 is selected as node x, although in other embodiments node 2 may also be selected as node x.

In step 312, a node y is determined as a node that is the highest degree node from the nodes that are close (e.g., within a predetermined distance) to node x. Assuming, for the example illustration based on graph 100, that the predetermined distance is chosen as a distance of two (2) in view of the overall size of graph 100, it can be seen that there are in fact 6 nodes that are close (e.g., within the predetermined distance of two (2)) to node 7 in graph 100. In particular, these nodes are node 8 (degree 3), node 9 (degree 2), node 2 (degree 4), node 6 (degree 3), node 3 (degree 3) and node 5 (degree 2). Out of these six candidate nodes, it can be seen from graph 100 (or from FIG. 2) that node 2 (degree 4) is the highest degree node. Therefore, for the example illustration, node 2 is selected as node y.

Although a particular predetermined distance of 2 is used in the example illustration to determine node y, in other aspects other distances may also be selected based on consideration of, for example, the size, span or centrality of the graph. In cases where there are a multiple number of nodes that are equivalently the highest degree nodes within the predetermined distance from node x, then any one (or more) of such equivalently highest degree nodes may be selected (e.g., randomly) as node y in step 312.

In step 314, an initial set of one or more root nodes are selected from nodes v, w, x, and y for building the collection of tree sub-graphs. In this regard, it is noted that the root nodes are selected from nodes v, w, x, and y because these nodes provide a desired diversity in the selection of the root nodes with respect to graph locality and degree centrality of the nodes in the graph. For example, the nodes that are selected as nodes v and w in accordance with process 300 are likely outside or extreme nodes away from the center of the graph. The node that is selected as node x in accordance with process 300 is likely one of the central (or close to central) nodes in the graph. Further, the node that is selected as node y in accordance with process 300 is likely a high degree node near the center of the graph.

For the example illustration based on graph 100, it is assumed that node 10 (node v) is selected as the first root node, node 7 (node x) is selected as the second root node, and node 2 (node y) is selected as the third root node in step 314, although in other aspects all or any other combination of nodes v, w, x, and y may also be selected as the root nodes.

In step 316, a collection of one or more tree sub-graphs are constructed from the graph for the root nodes that are selected in step 314. In order to leverage the hyperbolicity or curvature properties of the graph, the multi-level tree sub-graphs are constructed in a particular order by expanding the nodes in any given level of the tree sub-graph into their child nodes based on a descending order of degree, as exemplarily described below.

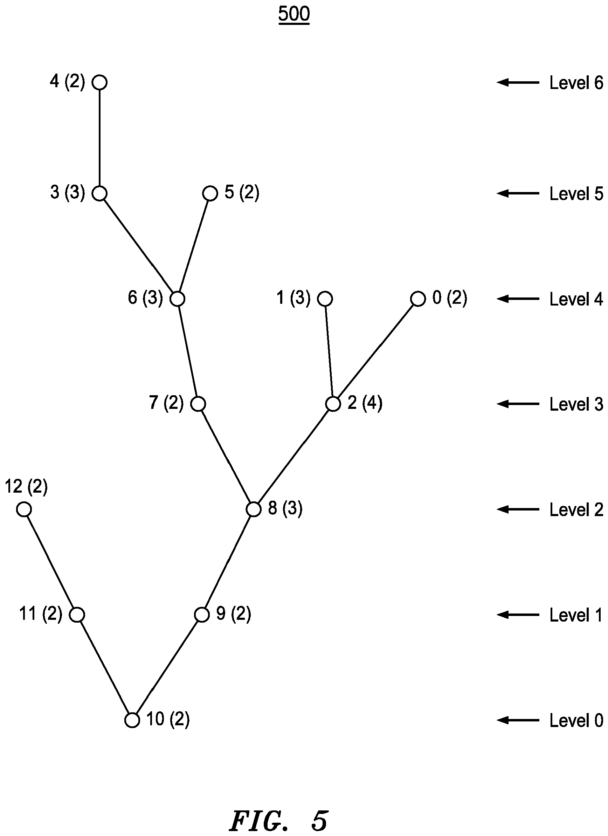

FIG. 5 depicts an example of a tree sub-graph 500 that may be constructed in step 316 based on the selection of node 10 (node v) as the first root node in step 314. The example tree sub-graph 500 includes six levels which are referenced herein as "Level 0", "Level 1", "Level 2", "Level 3", "Level 4", and "Level 5". As shown in FIG. 5, the tree sub-graph 500 includes each of the nodes 13 (nodes 0-12) of graph 100, each of which is for convenience designated using the format NN(D), where NN identifies a particular node and D indicates the degree of the node identified by NN.

The tree sub-graph 500 of FIG. 5 is constructed level-by-level in step 316 from the graph 100 of FIG. 1 starting with "Level 0", until all nodes 13 nodes (nodes 0-12) from graph 100 are represented once in one of the levels of the tree sub-graph 500. Node 10, selected in step 314, is used as the root node of the tree sub-graph 500 in "Level 0". "Level 0" will not include any nodes other than the root node, and is therefore complete.

The root node 10 of "Level 0" is expanded to include its neighboring nodes as child nodes in "Level 1". It can be seen in graph 100 that there are two neighboring nodes of node 10, namely nodes 11 and node 9. Thus, nodes 11 and 9 are both represented as child nodes of root node 10 in the tree sub-graph 500, which completes "Level 1".

Each of the nodes of "Level 1" is now expanded, based on a descending order of degree, into their respective child nodes in "Level 2" (as long as the child nodes are not already represented in any of the constructed levels of the tree sub-graph 100 as will be apparent below). Since both of the nodes 11 and 9 that are in "Level 1" of the tree sub-graph 500 happen to have the same degree of 2, it does not matter whether node 11 or node 9 is first expanded into its immediate neighboring nodes in "Level 2". Thus, for the example illustration, it is assumed that when choosing between nodes that have the same degree, a left-to-right selection is used, although in other aspects a right-to-left selection, a random selection, or some other criteria for selection may also be used.

Proceeding left-to-right accordingly, node 11 is first selected for expansion into its child nodes in "Level 2". It can be seen in graph 100 that there are two neighboring nodes of node 11, namely nodes 10 and node 12. As node 10 is already represented in "Level 0" of the tree sub-graph 500 as the root node, it is not included in "Level 2". Since node 12 is not yet represented in any of the constructed levels thus far, node 12 is included in "Level 2" as a child node of node 11.

Continuing left-to-right, the remaining node of "Level 1", node 9, is now selected for expansion into its child nodes in "Level 2". It can be seen in graph 100 that there are two neighboring nodes of node 9, namely nodes 8 and node 10. As node 10 is already represented in "Level 0" of the tree sub-graph 500 as the root node, it is not included in "Level 2". Since node 8 is not yet represented in any of the constructed levels thus far, node 8 is now included in "Level 2" as a child node of node 9. As there are no remaining nodes in "Level 1" to consider for expansion into "Level 2", the construction of "Level 2" is now complete.

Each of the nodes of "Level 2" is now expanded, based on a descending order of degree, into their respective child nodes in "Level 3" (as long as the child nodes are not already represented in any of the constructed levels of the tree sub-graph 100). It can be seen in FIG. 5 that node 8 is the highest degree node in "Level 2" with a degree of 3, followed by node 12 which is the next highest degree node with a degree of 2. Since node 8 has a higher degree than node 12, node 8 is selected before node 12 for expansion into its child nodes in "Level 3".

It can be seen in graph 100 that there are three neighboring nodes (corresponding to the degree) of node 8, namely node 2, node 7, and node 9. As node 9 has already represented in "Level 1" of the tree sub-graph 500, it is not included in "Level 3". Since node 2 and node 7 are not yet represented in any of the constructed levels thus far, node 2 and node 7 are now included as the child nodes of node 8 in "Level 3".

The highest degree node of "Level 2" having been expanded, node 12 is now selected as the next highest degree node for expansion into its child nodes in "Level 3". It can be seen in graph 100 that there are two neighboring nodes of node 12, namely node 8 and node 10. As both node 8 and node 10 have already been represented in "Level 2" and "Level 0" respectively, neither one of these two nodes is included again in "Level 3". As there are no remaining nodes in "Level 2" to expand into "Level 3", the construction of "Level 3" is now complete.

Each of the nodes of "Level 3" is now expanded, based on a descending order of degree, into their respective child nodes in "Level 4" (as long as the potential child nodes are not already represented in any of the constructed levels of the tree sub-graph 100). It can be seen in FIG. 5 that node 2 is the highest degree node in "Level 2" with a degree of 4, followed by the next highest degree node 7 with a degree of 2. Since node 2 has a higher degree than node 7, node 2 is selected before node 7 for expansion into its child nodes in "Level 4".

It can be seen in graph 100 that there are four neighboring nodes of node 2, namely node 0, node 1, node 8, and node 12. As node 8 and node 12 have previously been represented in "Level 2" of the tree sub-graph 500, neither of these two nodes is included as a child node in "Level 3". However, since node 0 and node 1 are not yet represented in any of the constructed levels thus far, node 0 and node 1 are now included as child nodes of node 2 in "Level 4".

The highest degree node of "Level 3" having been expanded, node 7 is now selected as the next highest node for expansion into its child nodes in "Level 4". It can be seen in graph 100 that there are two neighboring nodes of node 7, namely node 6 and node 8. As node 8 has already been represented in "Level 2", node 8 is not included as a child node in "Level 4". However, since node 7 has not yet represented in any of the constructed levels thus far, node 7 is included as a child node of node 8 in "Level 4". As there are no remaining nodes in "Level 3" to expand into "Level 4", the construction of "Level 4" is now complete.

Each of the nodes of "Level 4" is now expanded, based on a descending order of degree, into their respective child nodes in "Level 5" (as long as the potential child nodes are not already represented in any of the already constructed levels of the tree sub-graph 100). It can be seen that of the three nodes in "Level 4", node 6 and node 1 are the highest degree nodes with a degree of 3, followed by the next highest degree node 0 with a degree of 2. Since node 6 and node 1 have a higher degree than node 0, node 6 and node 1 are selected before node 0 for expansion into its child nodes in "Level 5".

Since node 6 and node 1 of "Level 4" happen to have the same highest degree of 3, either node 6 or node 1 may be selected as the first node that is expanded into its immediate neighboring nodes in "Level 5". Proceeding left-to-right as before (when the nodes are determined to have the same degree), node 6 is selected for expansion first into its child nodes in "Level 5".

It can be seen in graph 100 that there are three neighboring nodes of node 6, namely node 3, node 5, and node 7. As node 7 has already been represented in "Level 3", it is not included in "Level 5". However, since node 3 and node 5 have not been already represented in any of the constructed levels thus far, node 3 and node 5 are now included as child nodes of node 6 in "Level 5".

Continuing left-to-right, the remaining highest degree node of "Level 4", node 1, is now selected for expansion into its child nodes in "Level 5". It can be seen in graph 100 that there are three neighboring nodes of node 1, namely node 0, node 2, and node 3. As node 0, node 2, and node 3 have all been already been represented in the sub-graph 500 by this point, none of these three nodes is included as a child node in "Level 5".

As both of the highest degree nodes (node 6 and node 1) have been processed, node 0, as the next highest degree node, is now selected for expansion into its child nodes in "Level 5". It can be seen in graph 100 that there are two neighboring nodes of node 0, namely node 1 and node 2. As node 0 and node 2 have both already been represented in the sub-graph 500 by this point, none of these two nodes is included as a child node in "Level 5". As there are no remaining nodes in "Level 4" to potentially expand into "Level 5", the construction of "Level 5" is now complete.

Each of the nodes of "Level 5" is now expanded, based on a descending order of degree, into their respective child nodes in "Level 6" (as long as the potential child nodes are not already represented in any of the constructed levels of the tree sub-graph 100). It can be seen in FIG. 5 that of the two nodes in "Level 5" node 3 is the highest degree node with a degree of 3, followed by node 5 with a degree of 2. Since node 3 has a higher degree than node 5, node 3 is selected before node 5 for expansion into its child nodes in "Level 6".

It can be seen in graph 100 that there are three neighboring nodes of node 3, namely node 1, node 4, and node 6. As node 1 and node 6 have all been already represented in the tree sub-graph 500 by this point, neither one is included as a child node in "Level 6". However, since node 4 has not yet been represented in any of the constructed levels thus far, node 4 is now included as a child node of node 3 in "Level 6".

The highest degree node(s) of "Level 5" having been expanded, node 5 is now selected as the next highest node for expansion into its child nodes in "Level 6". It can be seen in graph 100 that there are two neighboring nodes of node 5, namely node 4 and node 6. As node 4 and node 6 have each been already been represented in "Level 4", neither one of these two nodes is included as a child node in "Level 6". As there are no remaining nodes in "Level 5" to expand into "Level 6", the construction of "Level 6" is now complete.

At this point, it can be seen that all thirteen nodes of graph 100, namely nodes 0-12, have been represented once in levels 0-6 of the tree sub-graph 500. Therefore, the tree sub-graph 500 is now complete. However, for the sake of completeness, the same conclusion that the tree-sub graph 500 is complete may also be reached by, as before, considering each of the nodes of "Level 6" for expansion, based on a descending order of degree, into their respective child nodes in a potential "Level 7" (as long as the potential child nodes are not already represented in any of the constructed levels of the tree sub-graph 100). As node 4 which has a degree of 2 is the only node in "Level 6", node 4 is selected for expansion into a potential "Level 7".

It can be seen in graph 100 that there are two neighboring nodes of node 4, namely node 3 and node 5. As each of node 3 and node 5 has already been represented in the tree sub-graph 500 by this point, none of these two nodes is included as a child node in "Level 7". As there are no remaining nodes in "Level 6" to expand into a potential "Level 7", the tree sub-graph 500 of FIG. 5 is completed.

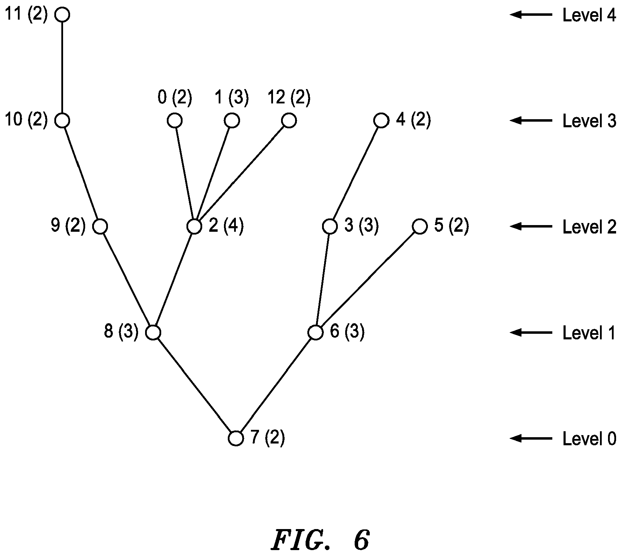

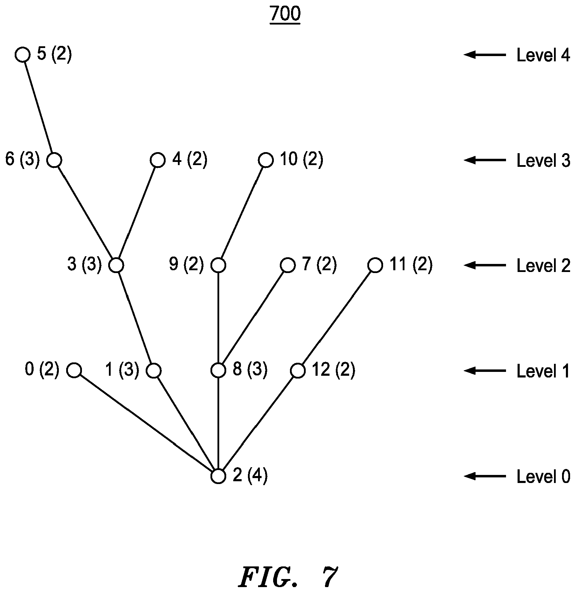

A detailed description for the construction of the tree sub-graph 500 of FIG. 5 having been provided where node 10 (node v) was selected as one of the root nodes in step 314, attention is now turned to node 7 (node x) and node 2 (node 7), which were also selected in step 314 as the second root node and third root node for the example illustration. Tree sub-graphs for both root node 7 and root node 2 may be constructed following a similar process as described above for constructing the tree sub-graph 500 for the root node 10. FIG. 6 illustrates an example of a tree sub-graph 600 that is constructed in step 316 based on the selection of node 7 as the second root node in step 314. Similarly, FIG. 7 illustrates an example of a tree sub-graph 700 that is constructed in step 316 based on the selection of node 3 as the third root node in step 314.

Upon construction of a collection of one or more tree sub-graphs in step 316 for the nodes that selected as the root nodes in step 314, the process 300 may proceed to step 318.

In step 318, the collection of one or more tree sub-graphs that are constructed in step 316 are used to estimate or compute the shortest distance between any given pair of nodes of the graph. More particularly the shortest distance for a given pair of nodes is estimated to be the smallest (e.g., least) of all the shortest distances that are derived from the tree sub-graphs for the given pair of nodes.

Continuing the example illustration, assume that a query is received for the shortest distance between node 1 and node 3 of the graph 100. It can be seen in FIG. 5 that the shortest distance that is indicated in the tree sub-graph 500 between node 1 and node 3 is a distance of 5 (via path 1-2-8-7-6-3). It can be seen in FIG. 6 that the shortest distance that is indicated in tree sub-graph 600 between node 1 and node 3 is also distance of 5 (also via path 1-2-8-7-6-3). Lastly, it can be seen in FIG. 7 that the shortest distance in tree sub-graph 700 between node 1 and node 3 is indicated as a distance of 1 (via path 3-1). Since the smallest or the minimum value of the three shortest distances that are derived from the tree sub-graphs 500, 600, and 700 is 1 (from tree sub-graph 700), the response to the query for the distance between node 3 and node 1 is provided in step 318 as distance of 1 (as opposed to the larger distance 5 indicated by tree sub-graph 500 and tree sub-graph 600). It can be seen in graph 100 of FIG. 1 that the distance 1 that is computed in step 318 based on the constructed tree sub-graphs is actually the correct distance between node 3 and node 1.

To provide an additional example, assume that a query is received for the shortest distance between node 8 and node 12 of the graph 100. It can be seen in FIG. 5 that the shortest distance that is indicated in the tree sub-graph 500 between node 8 and node 12 is a distance of 4 (via path 8-9-10-11-12). It can be seen in FIG. 6 that the shortest distance that is indicated in tree sub-graph 600 between node 8 and node 12 is a distance of 2 (via path 8-2-12). Lastly, it can be seen in FIG. 7 that the shortest distance in tree sub-graph 700 between node 8 and node 12 is also indicated as a distance of 2 (also via path 8-2-12). Since the smallest or the minimum value of the three shortest distances that are derived from the tree sub-graphs 500, 600, and 700 is 2 (from tree sub-graphs 600 and also tree sub-graph 700), the response to the query for the distance between node 8 and node 12 is provided in step 318 as distance of 2. Again, it can be seen in graph 100 of FIG. 1 that the distance 2 that is computed in step 318 based on the constructed tree sub-graphs is actually the correct distance between node 8 and node 12.

The process 300 may end in step 320.

As noted previously, the generation and use of the tree sub-graphs to compute distances between given pairs of node in a graph may introduce a non-zero error for certain pairs of nodes. Such errors may be reduced by selecting additional (and different) root nodes in step 314 and constructing additional tree sub-graphs in step 316. The additional tree sub-graphs may then also be used to compute distances based on the constructed tree sub-graphs as described in step 318.

The additional root nodes may be selected in different ways. For example, in one aspect the additional root nodes may be selected by iterating (one or more times) through steps 302-314 of the example process 300. In another particular aspect, the additional root nodes are selected in step 314 by considering the nodes of the whole graph (e.g., graph 100) in the decreasing order of their degree until a desired number of root nodes is determined. For each node considered in accordance with this aspect, one or more node may be selected as root nodes based on the decreasing order of degree if the candidate node is different and has not already been selected as a root node previously, and as long as the candidate node is not too close (e.g., within a predetermined distance) to another node that has already been selected as a root node.

The number of nodes that are selected as root nodes may be determined in various ways. In one aspect, the number of root nodes may be determined based on the diameter or span of the graph for which the tree sub-graphs are to be constructed. The diameter or span of the graph may be understood as the greatest shortest distance path of all the shortest distance paths between all different pairs of nodes in the graph. Returning to graph 100, it can be seen that the diameter of graph 100 is the distance 6 (e.g., the distance between node 4 and node 10). Thus, in one aspect, the number or root nodes that are selected can be at least equal to (or greater by a factor) than the diameter of the graph. It has been found that selecting the number of root nodes based on the diameter of the graph (or some factor thereof) provides a good balance between selecting a relatively few root nodes in comparison with the overall nodes in the graph while reducing the expected value of the erroneous result to a value close to zero for graphs that have many millions of nodes.

In another aspect, the number of root nodes that are selected may be determined by computing log n of the graph, where n is the number of nodes in the graph, and by selecting a number of nodes as root nodes that is at least equal to or greater than (e.g., some factor of) the computed value.

In still another aspect, the number of root nodes may also be determined dynamically. For example, an initial set of root nodes may be determined and tree sub-graphs constructed, and the constructed tree sub-graphs may be tested using a set of distance queries between various nodes of the graph. If the number of errors in the response to the queries is larger than a predetermined value (e.g., 5% or 1% or some other percentage), than additional root nodes may be selected and additional tree sub-graphs may be constructed until the expected value of error is within the desired parameters.

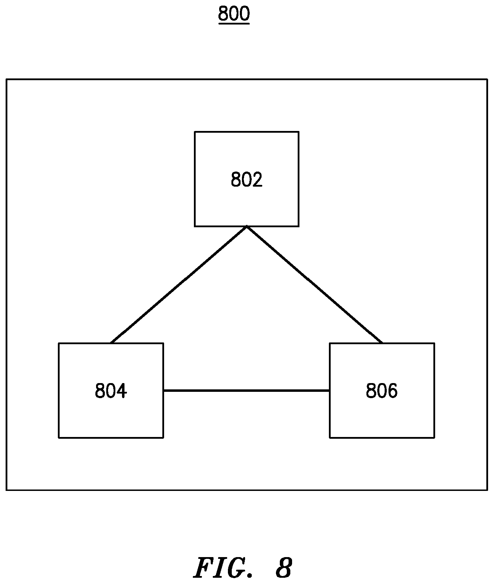

FIG. 8 depicts a high-level block diagram of a computing apparatus 800 suitable for implementing various aspects of the disclosure. Although illustrated in a single block, in other embodiments the apparatus 800 may also be implemented using parallel and distributed architectures. Thus, for example, various steps such as those illustrated in the example of process 300 may be executed using apparatus 800 sequentially, in parallel, or in a different order based on particular implementations. Apparatus 800 comprises a processor 802 (e.g., a central processing unit ("CPU")), that is communicatively interconnected with various input/output devices 804 and a memory 806.

The processor 802 may be any type of processor such as a general purpose central processing unit ("CPU") or a dedicated microprocessor such as an embedded microcontroller or a digital signal processor ("DSP"). The input/output devices 804 may be any peripheral device operating under the control of the processor 802 and configured to input data into or output data from the apparatus 900, such as, for example, network adapters, data ports, and various user interface devices such as a keyboard, a keypad, a mouse, or a display.

Memory 806 may be any type of memory suitable for storing electronic information, such as, for example, transitory random access memory (RAM) or non-transitory memory such as read only memory (ROM), hard disk drive memory, compact disk drive memory, optical memory, etc. The memory 806 may include data and instructions which, upon execution by the processor 802, may configure apparatus 800 to perform the functionality described above. In addition, apparatus 800 may also include an operating system, queue managers, device drivers, or one or more network protocols that are stored in memory 806 and executed by the processor 802.

Various aspects of the process described above may be implemented using one or more application specific integrated circuits (ASICs), field programmable gate arrays (FPGAs), or any other combination of hardware or software. Although illustrated graphically in the disclosure, the graph and the tree sub-graphs may be stored in various types of data structures (e.g., linked list) which may be accessed and manipulated by a programmable processor (e.g., CPU or FPGA) that is implemented using software or hardware.

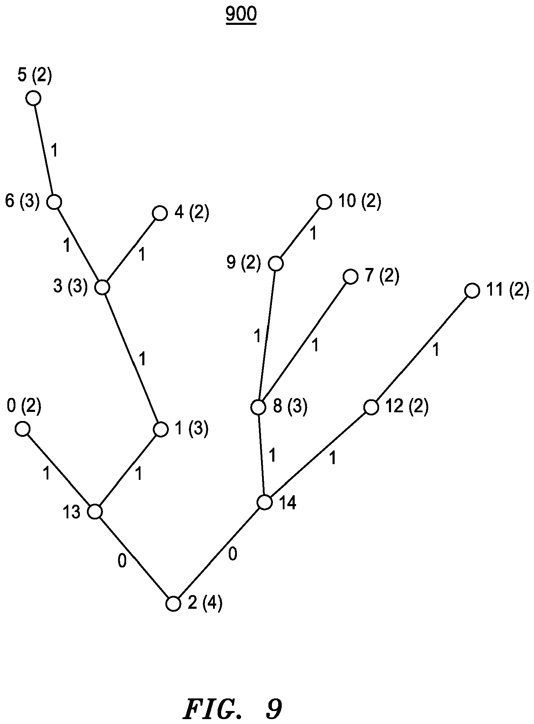

By way of example only, one way of storing the distances of a given tree sub-graph of nodes is to transform a given tree sub-graph *T* into a weighted binary tree *T',* such that for all node pairs in a graph, the shortest distance paths of the tree sub-graph *T* and weighted binary tree *T'* are the same. The transformation of T to T' may be done by introducing some pseudo-nodes. For example, two pseudo nodes q are r may be introduced if T has a node u directly connected to nodes v, w, x and y. T' may be constructed by connecting node u to pseudo nodes q and r with edges of weight 0, pseudo nodes q connected to nodes v and w with edges of weight 1 and pseudo node r connected to nodes x and y with edges of weight 1. (FIG. 9 illustrates a one particular example of a binary tree 900 formed by transforming the tree sub-graph 700 of FIG. 7. In the weighted binary tree T' 900 of FIG. 9, nodes 13 and 14 are pseudo nodes.) The shortest path distances in the binary tree T' (such as binary tree 900) may be encoded using a data structure consisting of a few labels associated with each node. For example, the binary tree *T'* may be represented and stored in a data structure that encodes, for each node of the binary tree *T*', the shortest distance from the root node of the tree *T'* to each node in the tree *T',* and further encodes the shortest distance path from the root node to each node in the tree *T'* as well.

The distance function *f* that may be used in step 318 of the process 300 may now be defined as follows: Given a query to compute the distance between a given pair of nodes n₁ and n₂, the shortest distance paths encoded in the data structure are used to determine the least common ancestor node n₃ of nodes n₁ and n₂ in *T'.* Then, the approximated distance between a given pair of nodes n₁ and n₂ may be generally determined as distance(n₁) + distance(n₂)-2 x distance(n₃), where distance (n₁) is the distance of n₁ from the root node, distance (n₂) is the distance of n₂ from the root node, and distance n₃ is the distance of n₃ from the root node. The least common ancestor node n₃ can be determined by taking a bitwise exclusive or of the node to root paths stored with nodes n₁ and n₂.

The systems and methods disclosed herein further enable the tree sub-graphs to be stored in one or more data structure(s) which 1) may be stored using little space (storage or memory) as possible, 2) can be used to provide distances estimations which are as close as possible (if not equal) to the actual distances between the nodes of the graph, and 3) can be used to respond to a query for a distance between any two nodes of the graph within microseconds and milliseconds as opposed to minutes and days.

The present disclosure describes systems and methods for calculating node distances in massive graphs which are better able to satisfy the goals stated above. The present disclosure describes systems and methods for preprocessing the graph to a data structure that can be stored efficiently and can be used to respond to distance queries much faster than other conventional approaches. The systems and methods disclosed herein are believed to be particularly effective for hyperbolic or near-hyperbolic graphs, such as mobile call graphs, online social network graphs, internet graphs at autonomous systems level, and the like.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure.

## Claims

1. An apparatus configured to construct one or more tree sub-graphs data structures for estimating a shortest distance between a given pair of nodes of a graph having multiple interconnected nodes, the method comprising:
a processor;
a memory communicatively connected to the processor, the memory configured to store the one or more tree sub-graph data structures and one or more executable instructions, which, upon execution by the processor, configure the processor to:
select one or more root nodes from the multiple interconnected nodes of the graph;
construct, for each of at least one of the one or more root nodes, a respective multi-level tree sub-graph data structure representing the multiple interconnected nodes of the graph **characterized in that** the multiple interconnected nodes of the graph are represented in a parent-child relationship in successive levels of the multi-level tree sub-graph data structure starting with each of the at least one of the one or more root nodes,
wherein said nodes have respective degrees;
wherein at least one level of the multi-level tree sub-graph data structure includes a plurality of parent nodes, the degree of at least one parent node in the plurality of parent nodes being higher than the degree of another parent node in the plurality of parent nodes, and,
wherein the processor is further configured to construct the multi-level tree sub-graph data structure by expanding respective ones of the plurality of parent nodes of the at least one level of the tree sub-graph data structure into one or more respective child nodes in a successive level of the tree sub-graph data structure based on a descending order of the degrees of the plurality of parent nodes.

2. The apparatus of claim 1, wherein the one or more executable instructions further configure the processor to select the one or more root nodes from the multiple interconnected nodes of the graph by:
determining a node u from the graph;
determining a node v from the graph, where node v is determined as the node of the graph that is farthest away from node u of the graph; and,
selecting node v as one of the one or more root nodes.

3. The apparatus of claim 2, wherein the one or more executable instructions further configure the processor to determine node u from the graph by selecting a random node from the graph.

4. The apparatus of claim 1, wherein the one or more executable instructions further configure the processor to select the one or more root nodes from the multiple interconnected nodes of the graph by:
determining a node w from the graph, where node w is determined as the node of the graph that is farthest away from a node v of the graph; and,
selecting node w as one of the one or more root nodes.

5. The apparatus of claim 1, wherein the one or more executable instructions further configure the processor to select the one or more root nodes from the multiple interconnected nodes of the graph by:
determining a shortest distance path between a node v of the graph and a node w of the graph; and,
determining a node x from the graph as the node of the graph that is close to midway on the shortest distance path between node v of the graph and node w of the graph; and,
selecting node x as one of the one or more roots nodes.

6. The apparatus of claim 1, wherein the one or more executable instructions further configure the processor to select the one or more root nodes from the multiple interconnected nodes of the graph by:
determining a node y from the graph as the node of the graph that has the highest degree within a predetermined distance from a node x of the graph; and,
selecting node y as one of the one or more root nodes.

7. The apparatus of claim 1, wherein the one or more executable instructions further configure the processor to:
determine a respective shortest distance for the given pair of nodes from each of at least one of the respective tree sub-graphs data structures; and,
estimate the distance between the given pair of nodes of the graph as a minimum of the determined respective shortest distances.

8. The apparatus of claim 1, wherein the one or more executable instructions further configure the processor to:
determine, based on a diameter of the graph, the number of root nodes that are selected from the multiple nodes of the graph or the number of respective tree sub-graphs that are constructed.

9. The apparatus of claim 1, wherein the one or more executable instructions further configure the processor to:
compute a statistical expected value of error based on estimated distances determined between the given pair of nodes using the tree sub-graphs and actual distances between the given pair of nodes computed based on the graph; and,
use the statistical expected value of error to determine the number of root nodes that are selected from the multiple nodes of the graph or the number of respective tree sub-graphs that are constructed.

10. The apparatus of claim 1, wherein the one or more executable instructions further configure the processor to:
select at least one of the one or more root nodes based on descending order of degrees of respective ones of the multiple interconnected nodes of the graph.

## Patentansprüche

1. Vorrichtung, konfiguriert zum Herstellen einer oder mehrerer Baum-Subgraph-Datenstrukturen zum Abschätzen eines kürzesten Abstands zwischen einem gegebenen Paar von Knoten eines Graphen, der mehrere miteinander verbundene Knoten aufweist, wobei das Verfahren umfasst:
einen Prozessor;
einen Speicher, der kommutativ mit dem Prozessor verbunden ist, wobei der Speicher konfiguriert ist zum Speichern einer oder mehrerer Baum-Untergraph-Datenstrukturen und eines oder mehrerer ausführbarer Befehle, die, bei Ausführen durch den Prozessor, den Prozessor konfigurieren zum:
Auswählen eines oder mehrerer Wurzelknoten aus den mehreren miteinander verbundenen Knoten des Graphen;
Herstellen, für mindestens einen des einen oder der mehreren Wurzelknoten, einer entsprechenden mehrstufigen Baum-Subgraph-Datenstruktur, welche die mehreren miteinander verbundenen Knoten des Graphen darstellt, **dadurch gekennzeichnet, dass** die mehreren miteinander verbundenen Knoten des Graphen in einem Eltern-Kind-Verhältnis in aufeinanderfolgenden Stufen der mehrstufigen Baum-Subgraph-Datenstruktur dargestellt werden, beginnend mit jedem des mindestens einen des einen oder der mehreren Wurzelknoten,
wobei besagte Knoten entsprechende Grade aufweisen;
wobei mindestens eine Stufe der mehrstufigen Baum-Subgraph-Datenstruktur eine Vielzahl von Elternknoten aufweist, der Grad mindestens eines Elternknotens in der Vielzahl von Elternknoten höher ist als der Grad eines anderen Elternknotens in der Vielzahl von Elternknoten, und
wobei der Prozessor weiterhin konfiguriert ist zum Herstellen der mehrstufigen Baum-Subgraph-Datenstruktur durch Erweitern entsprechender der Vielzahl von Elternknoten der mindestens einen Stufe der Baum-Subgraph-Datenstruktur in einen oder mehrere entsprechende Kinderknoten in einer aufeinanderfolgenden Stufe der Baum-Subgraph-Datenstruktur auf Grundlage einer absteigenden Reihenfolge der Grade der Vielzahl von Elternknoten.

2. Vorrichtung nach Anspruch 1, wobei der eine oder die mehreren ausführbaren Befehle weiterhin den Prozessor konfigurieren zum Auswählen des einen oder der mehreren Wurzelknoten aus den mehreren miteinander verbundenen Knoten des Graphen durch:
Bestimmen eines Knotens u aus dem Graphen;
Bestimmen eines Knotens v aus dem Graphen, wobei der Knoten v bestimmt ist als der Knoten des Graphen, der am weitesten von dem Knoten u des Graphen entfernt ist; und
Auswählen des Knotens v als einen des einen oder der mehreren Wurzelknoten.

3. Vorrichtung nach Anspruch 2, wobei der eine oder die mehreren ausführbaren Befehle weiterhin den Prozessor konfigurieren zum Bestimmen des Knotens u aus dem Graphen durch Auswählen eines zufälligen Knotens aus dem Graphen.

4. Vorrichtung nach Anspruch 1, wobei der eine oder die mehreren ausführbaren Befehle weiterhin den Prozessor konfigurieren zum Auswählen des einen oder der mehreren Wurzelknoten aus den mehreren miteinander verbundenen Knoten des Graphen durch:
Bestimmen eines Knotens w aus dem Graphen, wobei der Knoten w bestimmt ist als der Knoten des Graphen, der am weitesten von einem Knoten v des Graphen entfernt ist; und
Auswählen des Knotens w als einen des einen oder der mehreren Wurzelknoten.

5. Vorrichtung nach Anspruch 1, wobei der eine oder die mehreren ausführbaren Befehle weiterhin den Prozessor konfigurieren zum Auswählen des einen oder der mehreren Wurzelknoten aus den mehreren miteinander verbundenen Knoten des Graphen durch:
Bestimmen des Pfades mit dem geringsten Abstand zwischen einem Knoten v des Graphen und einem Knoten w des Graphen; und
Bestimmen eines Knotens x aus dem Graphen als der Knoten des Graphen, der in der Nähe der Hälfte des Pfades mit dem kürzesten Abstand zwischen Knoten v des Graphen und Knoten w des Graphen liegt; und
Auswählen des Knotens x als einen des einen oder der mehreren Wurzelknoten.

6. Vorrichtung nach Anspruch 1, wobei der eine oder die mehreren ausführbaren Befehle weiterhin den Prozessor konfigurieren zum Auswählen des einen oder der mehreren Wurzelknoten aus den mehreren miteinander verbundenen Knoten des Graphen durch:
Bestimmen eines Knotens y aus dem Graphen als der Knoten des Graphen, der den höchsten Grad innerhalb eines vorbestimmten Abstands von einem Knoten x des Graphen aufweist; und
Auswählen des Knotens y als einen des einen oder der mehreren Wurzelknoten.

7. Vorrichtung nach Anspruch 1, wobei der eine oder die mehreren ausführbaren Befehle den Prozessor weiterhin konfigurieren zum:
Bestimmen eines entsprechenden kürzesten Abstands für das gegebene Paar von Knoten von jeder der mindestens einen entsprechenden Baum-Subgraph-Datenstrukturen; und
Abschätzen des Abstands zwischen dem gegebenen Paar von Knoten des Graphen als Minimum der bestimmten entsprechenden kürzesten Abstände.

8. Vorrichtung nach Anspruch 1, wobei der eine oder die mehreren ausführbaren Befehle den Prozessor weiterhin konfigurieren zum:
Bestimmen, auf Grundlage eines Durchmessers des Graphen, der Anzahl von Wurzelknoten, die aus den mehreren Knoten des Graphen ausgewählt worden sind, oder der Anzahl entsprechender Baum-Subgraphen, die hergestellt worden sind.

9. Vorrichtung nach Anspruch 1, wobei der eine oder die mehreren ausführbaren Befehle den Prozessor weiterhin konfigurieren zum:
Berechnen eines statistisch erwarteten Fehlerwerts auf Grundlage geschätzter Abstände, die zwischen dem gegebenen Paar von Knoten bestimmt worden sind, unter
Verwenden der Baum-Subgraphen und der momentanen Abstände zwischen dem gegebenen Paar von Knoten, die auf Grundlage des Graphen berechnet worden sind; und Verwenden des statistisch erwarteten Fehlerwerts zum Bestimmen der Anzahl von Wurzelknoten, die aus den mehreren Knoten des Graphen ausgewählt worden sind, oder der Anzahl entsprechender Baum-Subgraphen, die hergestellt worden sind.

10. Vorrichtung nach Anspruch 1, wobei der eine oder die mehreren ausführbaren Befehle den Prozessor weiterhin konfigurieren zum:
Auswählen von mindestens einem des einen oder der mehreren Wurzelknoten auf Grundlage einer absteigenden Reihenfolge der Grade entsprechender der miteinander verbundenen Knoten des Graphen.

## Revendications

1. Appareil configuré pour construire une ou plusieurs structures de données de sous-graphes arborescents pour estimer une distance la plus courte entre une paire de noeuds donnée d'un graphe ayant de multiples noeuds interconnectés, le procédé comprenant :
un processeur ;
une mémoire connectée communicativement au processeur, la mémoire configurée pour stocker les une ou plusieurs structures de données de sous-graphe arborescent et une ou plusieurs instructions exécutables, qui, lors de l'exécution par le processeur, configurent le processeur pour :
sélectionner un ou plusieurs noeuds racines parmi les multiples noeuds interconnectés du graphe ;
construire, pour chacun d'au moins un des un ou plusieurs noeuds racines, une structure de données de sous-graphe arborescent multi-niveau respective représentant les multiples noeuds interconnectés du graphe, **caractérisé en ce que** les multiples noeuds interconnectés du graphe sont représentés dans une relation parent-enfant dans des niveaux successifs de la structure de données de sous-graphe arborescent multi-niveau en commençant par chacun du au moins un des un ou plusieurs noeuds racines,
dans lequel lesdits noeuds ont des degrés respectifs ;
dans lequel au moins un niveau de la structure de données de sous-graphe arborescent multi-niveau inclut une pluralité de noeuds parents, le degré d'au moins un noeud parent dans la pluralité de noeuds parents étant supérieur au degré d'un autre noeud parent dans la pluralité de noeuds parents, et,
dans lequel le processeur est en outre configuré pour construire la structure de données de sous-graphe arborescent multi-niveau en provoquant l'expansion de noeuds respectifs de la pluralité de noeuds parents du au moins un niveau de la structure de données de sous-graphe arborescent dans un ou plusieurs noeuds enfants respectifs dans un niveau successif de la structure de données de sous-graphe arborescent sur la base d'un ordre décroissant des degrés de la pluralité de noeuds parents.

2. Appareil selon la revendication 1, dans lequel les une ou plusieurs instructions exécutables configurent en outre le processeur pour sélectionner les un ou plusieurs noeuds racines parmi les multiples noeuds interconnectés du graphe en :
déterminant un noeud u à partir du graphe ;
déterminant un noeud v à partir du graphe, où le noeud v est déterminé comme le noeud du graphe qui est le plus éloigné du noeud u du graphe ; et,
sélectionnant le noeud v comme un des un ou plusieurs noeuds racines.

3. Appareil selon la revendication 2, dans lequel les une ou plusieurs instructions exécutables configurent en outre le processeur pour déterminer le noeud u à partir du graphe en sélectionnant un noeud aléatoire à partir du graphe.

4. Appareil selon la revendication 1, dans lequel les une ou plusieurs instructions exécutables configurent en outre le processeur pour sélectionner les un ou plusieurs noeuds racines parmi les multiples noeuds interconnectés du graphe en :
déterminant un noeud w à partir du graphe, où le noeud w est déterminé comme le noeud du graphe qui est le plus éloigné d'un noeud v du graphe ; et,
sélectionnant le noeud w comme un des un ou plusieurs noeuds racines.

5. Appareil selon la revendication 1, dans lequel les une ou plusieurs instructions exécutables configurent en outre le processeur pour sélectionner les un ou plusieurs noeuds racines parmi les multiples noeuds interconnectés du graphe en :
déterminant un chemin à distance la plus courte entre un noeud v du graphe et un noeud w du graphe ; et,
déterminant un noeud x à partir du graphe comme le noeud du graphe qui est proche à mi-chemin sur le chemin à distance la plus courte entre le noeud v du graphe et le noeud w du graphe ; et,
sélectionnant le noeud x comme un des un ou plusieurs noeuds racines.

6. Appareil selon la revendication 1, dans lequel les une ou plusieurs instructions exécutables configurent en outre le processeur pour sélectionner les un ou plusieurs noeuds racines parmi les multiples noeuds interconnectés du graphe en :
déterminant un noeud y à partir du graphe comme le noeud du graphe qui a le degré le plus élevé à une distance prédéterminée d'un noeud x du graphe ; et,
sélectionnant le noeud y comme un des un ou plusieurs noeuds racines.

7. Appareil selon la revendication 1, dans lequel les une ou plusieurs instructions exécutables configurent en outre le processeur pour :
déterminer une distance la plus courte respective pour la paire de noeuds donnée à partir de chacune d'au moins une des structures de données de sous-graphes arborescents respectives ; et,
estimer la distance entre la paire de noeuds donnée du graphe comme un minimum des distances les plus courtes respectives déterminées.

8. Appareil selon la revendication 1, dans lequel les une ou plusieurs instructions exécutables configurent en outre le processeur pour :
déterminer, sur la base d'un diamètre du graphe, le nombre de noeuds racines qui sont sélectionnés parmi les multiples noeuds du graphe ou le nombre de sous-graphes arborescents respectifs qui sont construits.

9. Appareil selon la revendication 1, dans lequel les une ou plusieurs instructions exécutables configurent en outre le processeur pour :
calculer une valeur d'erreur statistique attendue sur la base de distances estimées déterminées entre la paire de noeuds donnée en utilisant les sous-graphes arborescents et de distances réelles entre la paire de noeuds donnée calculées sur la base du graphe ; et,
utiliser la valeur d'erreur statistique attendue pour déterminer le nombre de noeuds racines qui sont sélectionnés parmi les multiples noeuds du graphe ou le nombre de sous-graphes arborescents respectifs qui sont construits.

10. Appareil selon la revendication 1, dans lequel les une ou plusieurs instructions exécutables configurent en outre le processeur pour :
sélectionner au moins un des un ou plusieurs noeuds racines sur la base de l'ordre décroissant de degrés de noeuds respectifs des multiples noeuds interconnectés du graphe.
